# EUROPEAN PATENT APPLICATION

(11) **EP 2 627 044 A1**
(43) Date of publication of application: **14.08.2013**
(21) Application number: 11830299.1
(22) Date of filing: 28.02.2011
(51) Int. Cl.: H04L 12/56, H04L 12/18

(54) **PATH CONSTRUCTING DEVICE AND PATH CONSTRUCTING METHOD**

(30) Priority: 07.10.2010 JP 2010227993
(71) Applicant: Panasonic Corporation, Osaka 571-8501 (JP)
(72) Inventor: LEE, Ern Yu, Osaka 540-6207 (JP); KARUPPIAH, Ettikan Kandasamy, Osaka 540-6207 (JP); YONEDA, Takahiro, Osaka 540-6207 (JP)
(74) Representative: Grünecker, Kinkeldey, Stockmair & Schwanhäusser
(86) International application number: PCT/JP2011/001168
(87) International publication number: WO 2012/046358

(57) **Abstract**

The invention generally relates to a path constructing device and a path constructing method that can be applied to an AV conference system having different network and resource environments, and a plurality of nodes, and that dynamically allocate resources by giving priority levels and optimizing. It is possible for this new technique to dynamically allocate resources by giving priority levels and optimizing based on AV mixing (MCU) abilities, encoding and decoding abilities, participant screen layout options, and conference events to construct AV paths. This technique is suitable for a real-time AV conference system that can optimize given AV processes and network resources by reflecting the dynamic needs of users.

## Description

### Technical Field

The invention relates to a path constructing device and a path constructing method that can be applied to an AV (Audio/Video) conference system having different network and resource environments, and a plurality of nodes, and that dynamically allocates resources by giving priority levels and optimizing.

### Background Art

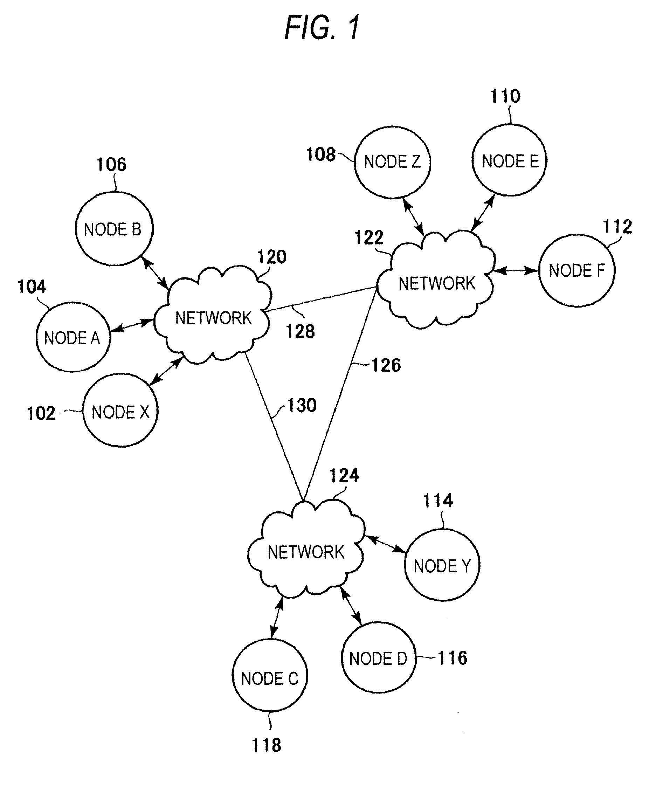

ALM (Application Layer Multicast) makes unnecessary the multicast forwarding function in IP layer by allowing AV packets to be forwarded by members themselves. As a result, AV packet forwarding in application layer becomes flexible. As shown in Fig. 1, ALM exchanges data packets at the same time among two or more entities such as clients in a multi-party application or the like. Therefore, an ALM session is defined as a logical session in which these entities (clients) are connected through networks.

According to a patent document 1, in an N-Tree algorithm, a water spreading policy is applied to construct "ALM paths of N sources for which bandwidth is fairly allocated" at the same time. The algorithm operates in three phases. In the three phases, the first phase is a connection establishing phase to gather network metrics. The second phase is an N-Tree constructing phase in which the N-Tree algorithm is performed to form ALM paths among ALM nodes. The final phase is an N-Tree optimizing phase to optimize the ALM paths by adopting a method of moving and reordering links.

In the N-Tree algorithm, the ALM paths having fairly allocated bandwidth are constructed based on available bandwidth and latency to ALM nodes. An individual request of an end node for bandwidth is not considered when bandwidth is allocated by using the N-Tree algorithm, resulting in that the AV quality for ALM nodes is not optimized. In a multi-party ALM video conference session, participants may continuously customize their own screen layouts, which requires dynamic, differentiated bandwidth and latency. This problem is solved by the invention of a patent document 2.

"Differentiated Fair Bandwidth allocation of source-specific network route" mechanism of the patent document 2 which targets to allocate bandwidth based on receiver-driven display resolution and contents types for ALM application. This mechanism assumes to have display resolutions according to different screen layouts selected by respective participants in the video conference session, and different contents types such as audio, video and document. In addition, display resolutions can be, for example, HD720p, HD1080i, 4CIF, CIF, and QCIF. ALM paths are constructed by differentiating two key components, that is, (i) the display resolution at a receiver side and (ii) the contents type. In this case, it is possible to construct different network routes for different ALM nodes in a single streaming session. Also, in this case the ALM paths are associated with the network bandwidth.

According to the requested display resolutions and the priority levels of the contents types, ALM paths among stream transmitting nodes and stream receiving nodes are allocated the maximum available bandwidth by using the N-Tree algorithm. Therefore, the best AV quality is achieved for each ALM node. ALM node groups are formed based on node types (or source-specific types), namely, stream transmitting nodes, stream relaying nodes and stream receiving nodes, along with display resolutions and contents types, namely, selection parameters.

In the method of the patent document 2, ALM paths are constructed by using the N-Tree algorithm to select nodes from different groups based on node types and selection parameters. Other parameters are encoding bit rate, image resolution and frame rate. In addition it is assumed that these other parameters are tuned in accordance with the allocated bandwidth in compressing/encoding processes, in order to optimize resources. Priority level giving is executed based on display resolutions and contents types which may dynamically change based on user requests. In this case, bandwidth is dynamically allocated without compromising the N-Tree algorithm.

### Prior Art Documents

### Patent Documents

[Patent document 1] WO2009/098748
[Patent document 2] WO2009/153945

### Summary of Invention

### Technical Problem

It is assumed in the above mentioned two inventions that all nodes are the same in terms of AV contents processing ability. Also, changes in those conference sessions in which there are a plurality of conference events and a plurality of participant screen layouts in the same session are not considered in these inventions. Lack of these considerations, as described later, has serious influences on the resource allocations for the purposes of giving priority levels and optimizing in AV sessions.

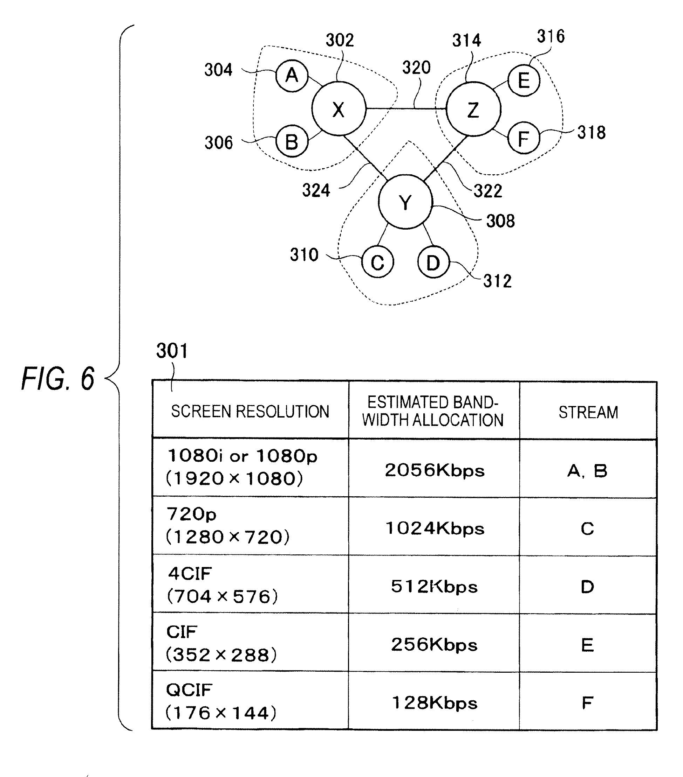

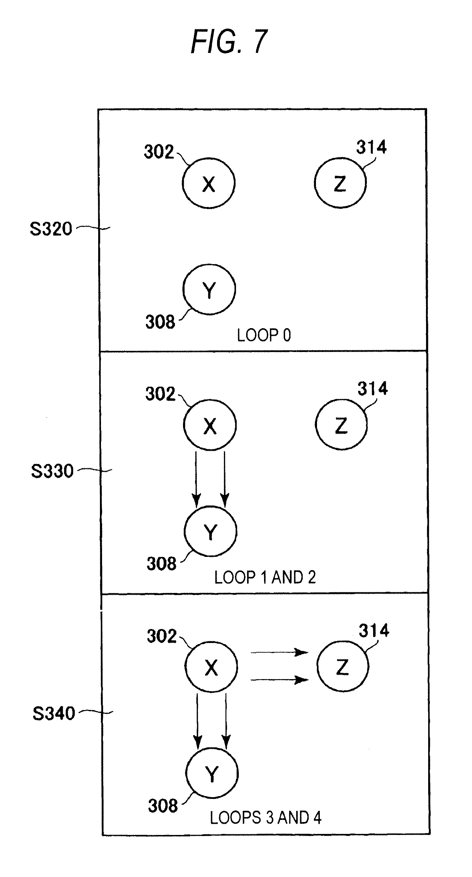

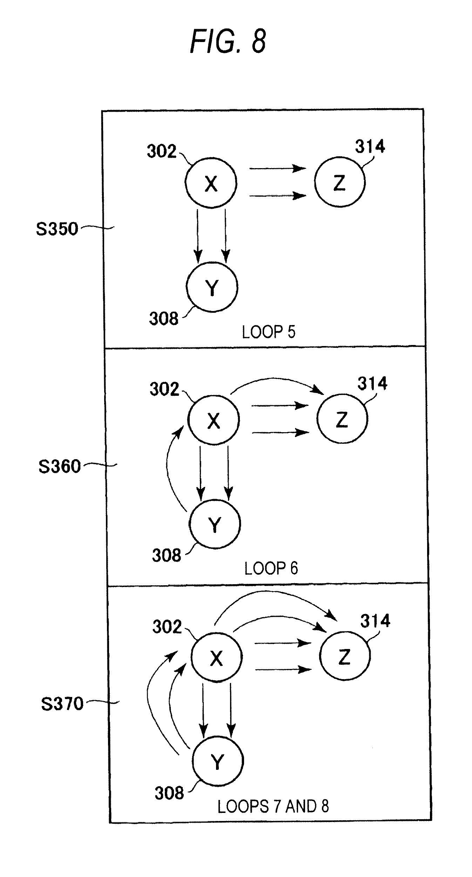

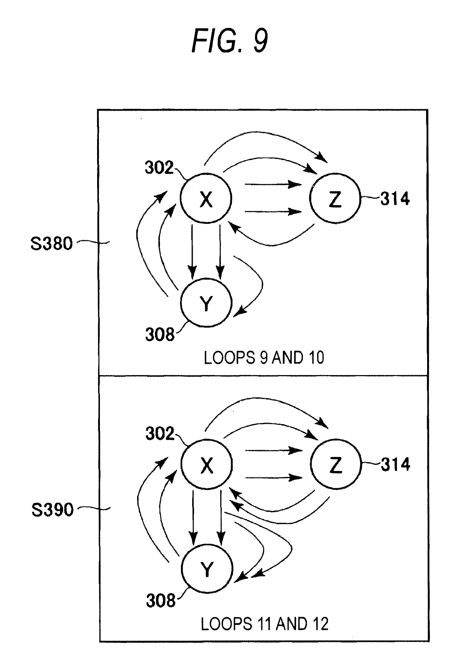

The problems can be exemplified based on the following figures when it is assumed that the parameters of main resources are the same in the device. The main resources include AV mixing (MCU: Multiple Control Unit) abilities, and encoding and decoding capacities of all nodes, the screen layout options of participants, and conference events. These figures, including Figs. 6, 7, 8 and 9, shows a method of constructing an AV distribution tree of three nodes which are given for the method described in the patent document 2 by using the N-Tree (the invention of the patent document 1). According to the invention of the patent document 1, the N-Tree is not optimally constructed in terms of the encoder/decoder usage. This results in delays in processing. As a result, the video conference quality experienced degrades (video lagging). Therefore, in this case, the resources other than bandwidth and latency are also important.

Therefore, for the invention of the patent document 1, the N-Tree must be triggered by including changes of screen layout options and conference events in addition to resolutions and contents types, and main resources must be given priority levels and optimized. The main resources include AV mixing (MCU) abilities, and encoding and decoding abilities, etc.

An object of the invention is to provide a path constructing device and a path constructing and allocating method that dynamically allocate resources by giving priority levels and optimizing, to construct delivery paths of the stream contents that are transmitted and received among a plurality of communication nodes.

### Solution to Problem

The present invention provides a path constructing device for constructing a delivery path of stream contents which are transmitted and received among a plurality of communication nodes in a system, and being one communication node in the system, the path constructing device comprising:
a resource priority level giving section that gives priority levels to allocations of available resources to construct the delivery path;
a resource optimizing section that optimizes the allocations of the available resources to construct the delivery path; and
a path constructing section that constructs the delivery path of the stream contents based on the allocations of the resources which are given priority levels by the resource priority level giving section and optimized by the resource optimizing section.

The present invention provides a path constructing method for constructing a delivery path for transmitting stream contents which are transmitted and received among a plurality of communication nodes in a system, and being performed by one communication node in the system, the path constructing method comprising:
a resource priority level giving step for giving priority levels to allocations of available resources to construct the delivery path;
a resource optimizing step for optimizing the allocations of the available resources to construct the delivery path; and
a path constructing step for constructing the delivery path of the stream contents based on the allocations of the resources which are given priority levels in the resource priority level giving step and optimized in the resource optimizing step.

### Advantageous Effects of Invention

According to the path constructing device and the path constructing method of the invention, resources are dynamically allocated by being given priority levels and being optimized, in order to construct delivery paths of the stream contents that are transmitted and received among a plurality of communication nodes.

### Brief Description of Drawings

[Figure 1] Fig. 1 shows a network that has three subnetworks and a plurality of connected nodes.
[Figure 2] Fig. 2 shows an exemplified configuration of a plurality of networks and connected nodes in a conference session to explain an example of the invention of the patent document 1.
[Figure 3] Fig. 3 shows an example of detailed steps for constructing an N-Tree in which bandwidth in given initial resources is fairly allocated.
[Figure 4] Fig. 4 further shows the example of detailed steps for constructing the N-Tree in which bandwidth in given initial resources is fairly allocated.
[Figure 5] Fig. 5 further shows the example of detailed steps for constructing the N-Tree in which bandwidth in given initial resources is fairly allocated.
[Figure 6] Fig. 6 shows an exemplified configuration of a plurality of networks and connected nodes in a conference session to explain an example of the invention of the patent document 2.
[Figure 7] Fig. 7 shows an example of detailed steps for fairly allocating bandwidth by differentiating the source-specific network routes based on display resolutions and contents types determined by receiver sides.
[Figure 8] Fig. 8 further shows the example of detailed steps for fairly allocating bandwidth by differentiating the source-specific network routes based on display resolutions and contents types determined by receiver sides.
[Figure 9] Fig. 9 further shows the example of detailed steps for fairly allocating bandwidth by differentiating the source-specific network routes based on display resolutions and contents types determined by receiver sides.
[Figure 10] Fig. 10 shows an exemplified configuration of a plurality of networks and connected nodes in a conference session to explain an example of the application of the invention.
[Figure 11] Fig. 11 shows an example of detailed steps for constructing an N-Tree in which resources are given priority levels and optimized in heterogeneous environments.
[Figure 12] Fig. 12 further shows the example of detailed steps for constructing an N-Tree in which resources are given priority levels and optimized in heterogeneous environments.
[Figure 13] Fig. 13 further shows the example of detailed steps for constructing an N-Tree in which resources are given priority levels and optimized in heterogeneous environments.
[Figure 14] Fig. 14 shows an N-Tree constructing device according to the embodiment of the invention in which resources are given priority levels and optimized.
[Figure 15] Fig. 15 defines a structure of ALM-MCU resource state messages according to the embodiment of the invention.
[Figure 16] Fig. 16 defines a structure of ALM-MCU video input/output (I/O) state messages according to the embodiment of the invention.
[Figure 17] Fig. 17 defines a structure of conference configuration state messages according to the embodiment of the invention.
[Figure 18] Fig. 18 defines a structure of a video stream according to the embodiment of the invention.
[Figure 19] Fig. 19 specifies estimated bandwidth of respective resolution types according to the embodiment of the invention.
[Figure 20] Fig. 20 specifies the respective maximum latencies (delays) of priority levels according to the embodiment of the invention.
[Figure 21] Fig. 21 shows a priority level table of participants based on the roles of the participants in conference events according to the embodiment of the invention.
[Figure 22] Fig. 22 shows an ALM-MCU resource information table according to the embodiment of the invention.
[Figure 23] Fig. 23 shows a flowchart of the main steps of the N-Tree constructing method according to the embodiment of the invention in which resources are allocated by being given priority levels and optimized.
[Figure 24] Fig. 24 shows a flowchart of forming an ALM conference session according to the embodiment of the invention.
[Figure 25] Fig. 25 further shows the flowchart of forming the ALM conference session according to the embodiment of the invention.
[Figure 26] Fig. 26 further shows the flowchart of forming the ALM conference session according to the embodiment of the invention.
[Figure 27] Fig. 27 further shows the flowchart of forming the ALM conference session according to the embodiment of the invention.
[Figure 28] Fig. 28 shows the details of the step S1408 in which an inter-cluster ALM N-Tree is constructed by giving resources priority levels and optimizing resources according to the embodiment of the invention.
[Figure 29] Fig. 29 shows the steps for estimating resources necessary for respective screen layout options selected by users according to the embodiment of the invention.
[Figure 30] Fig. 30 shows the steps for estimating resources necessary for respective screen layout options selected by users according to the embodiment of the invention.
[Figure 31] Fig. 31 shows that resources are given priority levels according to the embodiment of the invention.
[Figure 32] Fig. 32 further shows that resources are given priority levels according to the embodiment of the invention.
[Figure 33] Fig. 33 shows that resources are allocated by being optimized according to the embodiment of the invention.
[Figure 34] Fig. 34 further shows that resources are allocated by being optimized according to the embodiment of the invention.
[Figure 35] Fig. 35 shows a lecture session in which two layouts are watched at a teacher site and a student site, respectively.
[Figure 36] Fig. 36 shows a question and answer scenario of the lecture session in which a teacher site, a student (questioner) site and a student (listener) site are included.

### Description of Embodiments

In a N-Tree constructing device of the invention, resources are dynamically allocated by being given priority levels and being optimized based on respective parameters, in order to construct AV paths (in particular, ALM paths) which are contents delivery paths. Furthermore, in addition to parameters such as bandwidth, latency, display resolution, and contents type, these parameters also include AV mixing (MCU) ability, encoding and decoding ability, participant screen layout option, conference event, etc. The different characteristics of CE devices that have different hardware abilities and AV conference dynamics underlying ongoing sessions make it necessary to allocate resources dynamically by giving priority levels and optimizing, in order to optimally consume resources. The different hardware abilities are AV mixing (MCU) ability, encoding and decoding ability, total link bandwidth capacity or display resolution. The resources in the invention refer to network bandwidth, latency, the encoding/decoding abilities of MCUs, etc. In addition, the AV conference dynamics refers to variations of available bandwidth, changes of contents type, changes of screen layout or changes of conference event.

In an ALM session, AV contents are streamed via different routes between transmitting nodes and receiving nodes. In addition, in the ALM session, AV contents, without changes or with changes before being transferred to the next node, are transferred along ALM streaming paths or can be consumed locally. As a result, it is possible to balance loads among participating nodes. Therefore, sufficient resources are necessary for respective ALM nodes to be able to operate AV contents.

For this purpose, it is necessary to dynamically give priority levels to and optimize CE resources, in order to construct ALM paths that reflect dynamic network states and conference session events. As a result, it is guaranteed that the resource efficiency of the constructed ALM paths is outstanding.

Below, definitions of specific terms referenced in the specification are described, to ensure consistency of the meanings.

"ALM session": an ALM session is defined as a logical session that is connected through a network. For example, as shown in Fig. 1 in a multi-party application, a plurality of ALM nodes (including ALM or ALM-MCU nodes), participate in an ALM session by simultaneously exchanging data packets between respective nodes.

"ALM node": an ALM node is a node that participates in an ALM session, and is able to perform packet routing based on the ALM.

"Non-ALM node" or "end node": a Non-ALM node or end node is a node that does not perform ALM functions. It is, typically, a node that generates contents (source) or consumes contents. In other words, it is a node that participates in an ALM session, but is unable to perform packet routing based on the ALM.

"ALM-MCU node": an ALM-MCU node is an ALM node that performs contents mixing on the received contents and transfers the contents to other ALM or ALM-MCU nodes.

"Full mixing": full mixing is an MCU operation that mixes all of the contents received from a source node.

"Partial mixing": partial mixing is an MCU operation in which only part of the contents of ALM session participants are mixed by ALM-MCU nodes.

"Local cluster": a local cluster is a cluster that indicates all that are directly connected to an ALM-MCU node.

"Channel between MCUs": a channel between MCUs is a network route between ALM-MCU nodes for streaming full mixed or partial mixed contents.

"High priority level node": a high priority level node is an important ALM node or ALM-MCU node that is the most important node.

"AV mixing (MCU) capacity": AV mixing (MCU) capacity is a capacity of an ALM-MCU node to mix N AV streams by hardware or software ability.

"Encoding and decoding abilities": encoding and decoding abilities are abilities of an ALM-MCU node to encode and/or decode N pieces of AV streams with the help of hardware or software and encoders or decoders.

"Maximum resource (greatest resource)": maximum resource is any type of resource that can be quantified and compared in a group of ALM nodes or ALM-MCU nodes that have a sequence of priority levels starting from the node that has the richest resource.

"MESH network": a MESH network is a fully interconnected AV stream supply link among all ALM-MCU nodes of an ALM session.

"Inter-cluster": inter-cluster means between the clusters of ALM nodes or ALM-MCU nodes (for example, networks 120, 122 and 124 of Fig. 1).

"Intra-cluster": intra-cluster means within the same cluster of ALM nodes or ALM-MCU nodes (for example, nodes 102, 104 and 106 of the network 120 of Fig. 1).

"B(X) = n": it indicates that the uploading bandwidth of a node X is n.

"D (X, Y) = m": it indicates that the delay between X and Y that are two nodes is m. ("delay" and "latency" has the same meaning. In the specification, these terms can be interchangeably used.)

"MAX_LATENCY = p": it indicates that maximum latency p is set by the N-Tree algorithm in an ALM session to construct ALM paths.

"ED(X) = r/s": indicates that a node X has r AV encoders and s decoders.

"S (X) = {a, b, , z}": it indicates that the source ALM nodes of an ALM-MCU node X can be a-z nodes.

"{Expression A} → {Expression B}": it indicates a state change from a current state of expression A to a new state of expression B.

Below, the embodiment of the invention is described in which resources are dynamically allocated by being given priority levels and being optimized to construct AV paths.

Fig. 1 shows that a plurality of ALM nodes (102, 104, 106, 108, 110, 112, 114, 116 and 118) are connected to local networks (120, 122 and 124), respectively. In an ALM session, these local networks (120, 122 and 124) are connected through different links (126, 128 and 130), and an even bigger network can be formed. Eventually, all nodes in the ALM session are connected within one network in which connections between respective nodes are possible. ALM-MCU nodes (102, 108 and 114) are computer readable memory devices that can carry out the invention by hardware or software.

It is possible for multimedia applications including AV conference applications that run on respective clients to exchange AV streams between each other at the same time in an ALM session. To achieve a balancing and dynamic AV mixing operation, there must be at least two ALM-MCU nodes in the network. Fig. 1 shows that there are three ALM-MCU nodes (102, 108 and 114), which means one ALM-MCU node in each of local networks (120, 122 and 124). However, it is possible to arrange ALM-MCU nodes in part of the networks, and it is not necessary to arrange them in different local networks. This is determined by the ALM arrangement tree algorithm and the mixing capacity of ALM nodes (MCU).

Simply, it is assumed in the specification that an ALM-MCU node only mixes AV contents in its own local cluster nodes. For example, an ALM-MCU node X mixes the contents from nodes A and B and contents of the node X (102) itself. Thus, ALM nodes, only stream AV contents to one ALM-MCU node in the network based on the configuration of an ALM session.

The forming of an ALM session may be accelerated by a group membership mechanism, but this is not included in the scope of the invention.

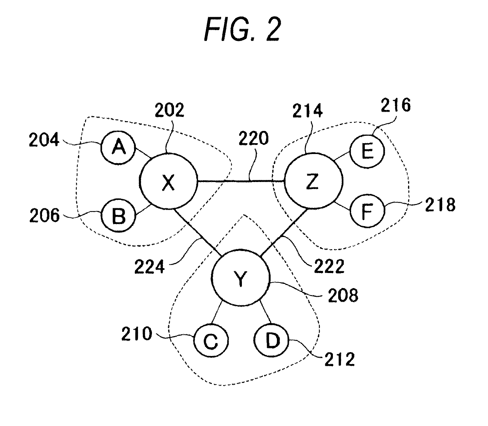

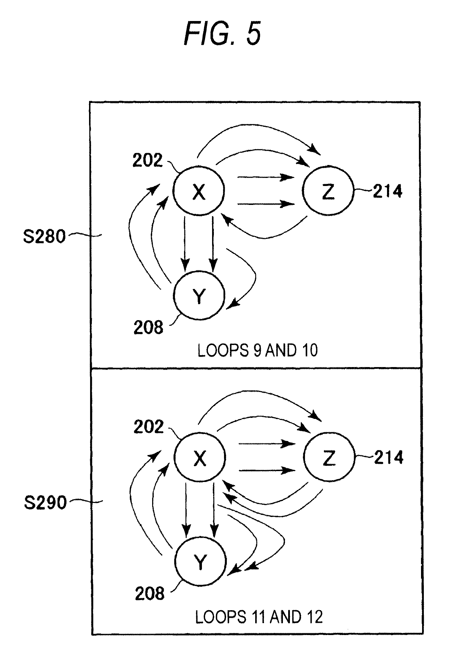

Next, the problems of the invention of the patent document 1 will be described with reference to Figs. 2, 3, 4 and 5. Fig. 2 shows a simple example of three ALM-MCU nodes (202, 208 and 214) that have ALM nodes (204, 206, 210, 212, 216 and 218) in local clusters, respectively. In order to explain operations of the invention of the patent document 1, only the ALM-MCU nodes (202, 208 and 214) are covered in the following description.

The uploading bandwidth of the nodes 202, 208 and 214 are allocated as follows: B(X) = 16 Mbps, B(Y) = 8 Mbps and B (Z) = 4 Mbps, respectively. In addition, for the nodes 202, 208 and 214, the delay D (X, Y) of a link 224 = 10 ms, the delay D (Y, Z) of a link 222 = 50 ms, and the delay D (Z, X) of a link 220 = 20 ms, respectively. Maximum link latency (MAX_LATENCY) is set to 250 ms (MAX_LATENCY = 250 ms). The numbers of encoder and decoder units of the ALM-MCU nodes X (202), Y (208), and Z (214) are as follows: ED (X) = 4/4, ED (Y) = 4/4, and ED (X) = 8/8, respectively. Main inventive point of the patent document 1 is to achieve bandwidth fairness by considering uploading bandwidth and link latency, but the resources allocated in the construction of ALM paths are not given priority levels and optimized.

In this example, the inventors make the following assumptions to easily exemplify the problem of resource allocations without giving priority levels and optimizing in an example of encoder/decoder units.

1. ALM-MCU nodes are X (202), Y (208) and Z (214).

2. ALM nodes are A (204), B (206), C (210), D (212), E (216) and F (218).

3. If the encoding/decoding of an ALM-MCU node exceeds its allowed processing capacity, the AV processing delay increases.

4. For the purpose of AV encoding and decoding, if an ALM-MCU node transmits an AV stream, one encoder is required, and if an ALM-MCU node receives an AV stream, one decoder is required.

5. In order to participate in a conference session, an ALM node must be connected to an ALM-MCU node.

6. There is no bandwidth limit or delay between an ALM node and an ALM-MCU node.

7. An N-Tree algorithm constructs a "MESH network" for all AV sources.

8. 1 slot size is 512 Kbps.

9. ALM-MCU nodes have sufficient downloading bandwidth and mixing processing powers.

10. Mixing is performed only in a local cluster.

11. F is a high priority level node (or an active node).

The problems of the invention of the patent document 1, in which uploading bandwidth and link latencies are considered, are shown in this example. These problems lead to a method of consuming resources in which the relation of encoder/decoder units, participant priority levels, and mixing processing powers are not optimized.

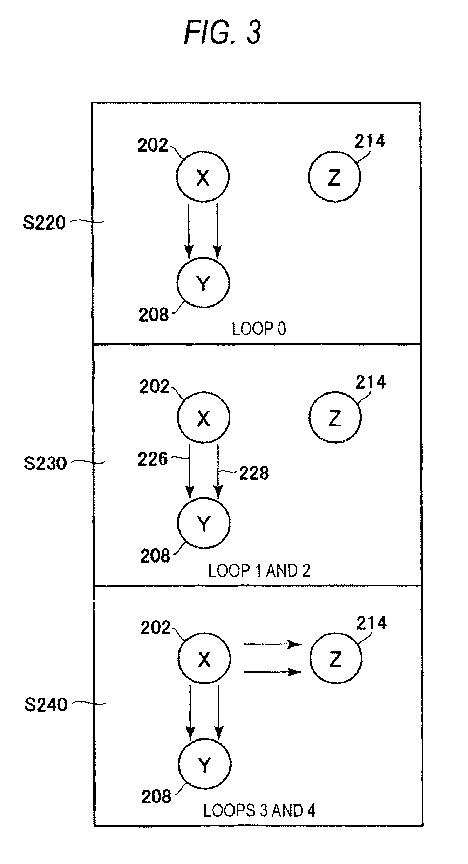

Figs. 3, 4 and 5 show detailed operation loops of the N-Tree algorithm of the invention of the patent document 1.

Step S220: a loop 0;
- In the initial states of ALM-MCU nodes and ALM nodes, the resources available to these nodes are shown.

Step S230: loops 1 and 2;
- The ALM-MCU nodes X (202) and Y (208) are connected.
- The uploading bandwidth is reduced by 2 slot sizes (2×512Kbps), namely, only 1 Mbps. The uploading bandwidth changes as follows: B (X) = 16 Mbps →B (X) = 15 Mbps.
- With the addition of the ALM node A and the ALM node B, the list of the source nodes changes as follows: S(Y) = {c, d} →S(Y) ={a, b, c, d}.
- Since the node X (202) has larger bandwidth available and D (X, Y) along the route (224) to the node Y (208) = 10ms, first, the node X (202) is selected.
- One encoder is allocated to each of the streams of the ALM node A (204) and the ALM node B (206) in the ALM-MCU node X (202). One decoder is allocated to each of the streams of the ALM node A (204) and the ALM node B (206) in the ALM-MCU node Y (208). The allocation of encoders/decoders changes as follows: ED (X) = 4/4 → ED (X) = 2/4 and ED (Y) = 4/4 → ED (Y) = 4/2. These encoders and decoders encode and decode the AV streams from the ALM node A (204) and the ALM node B (206), respectively.
- The contents of the ALM node A (204) and the ALM node B (206) are delivered from the ALM-MCU node X (202) to the ALM-MCU node (208) through links 226 and 228 for the purpose of mixing, respectively.

Similarly, other N-Tree algorithm steps S230, S240, S250, S260, S270, S280, and S290 are shown in Figs. 3, 4 and 5. In all of these steps, in order to construct ALM paths, only bandwidth and latencies are considered. After ALM paths are constructed, encoders and decoders are allocated. Therefore, in the step S250, there is no any encoders available in the node X, that is, ED (X) = 0/3. This is the worst state since in the step S260, the encoder count becomes -1, that is, ED (X) = -1/3. As a result, in accordance with the N-Tree algorithm method of the patent document 1, when a stream of the ALM node C (210) is relayed to the ALM-MCU node Z, an AV processing delay happens. However, in the same step S260, there are unused encoder/decoder resources in the ALM-MCU node Y (208) and the ALM-MCU node Z (214), that is, ED (Y) = 3/2 and ED (Z) = 8/5. This problem becomes more serious for the ALM-MCU node X (204) in the step S280 and the step S290.

The examples above simply show the problems of the N-Tree algorithm without considering giving priority levels to and optimizing resources when ALM paths are constructed.

The patent document 2 resolves the problem by optimizing bandwidth allocation based on user screen resolutions and contents types, but does not consider other resources which are very important in a multi-node AV conference system. Other important resources include AV mixing (MCU) abilities, encoding and decoding abilities, participant screen layout options, and conference events. The problems of the patent document 2, which does not optimize and give priority levels to different conference events when resources are allocated in the construction of ALM paths, are exemplified by Figs. 6, 7, 8 and 9. In the example of the patent document 2, to illustrate easily, the same assumptions as previously made to the patent document 1 is used. The only difference is that the assumption 8, in this case, becomes "8. One slot is varied by user screen resolutions and contents types ".

In the following example, the problems of the invention of the patent document 2, which optimizes bandwidth allocations based on screen resolutions and contents types, are exemplified. In the invention, other types of resources such as AV mixing (MCU) abilities, and encoding and decoding abilities are not considered when resources are allocated. For this reason, in the invention of the patent document 2, resources for different dynamic conference events are not used optimally.

Fig. 6 shows the same configuration as Fig. 2 and a table 301 which shows contents resolutions of the ALM node 304 (stream ALM node A-1920×1080), the ALM node 306 (stream ALM node B-1920×1080), the ALM node 310 (stream ALM node C-1280x720), the ALM node 312 (stream ALM node D-704×576), the ALM node 316 (stream ALM node E-352x288), and the ALM node 318 (stream ALM node F-176 × 144) for illustrative purposes.

Step S320: a loop 0;
- In the initial states of ALM-MCU nodes and ALM nodes, the resources available to these nodes are shown.

Step S330: loops 1 and 2;
- ALM-MCU nodes X (302) and Y (308) are connected.
- Since the high resolution ALM nodes A (304) and B (306) are included, a larger bandwidth is allocated from the B(X) of the ALM-MCU node X. The bandwidth changes as follows: B(X) = 16 Mbps → B(X) = 12 Mbps.
- However, the allocation of encoders/decoders is the same, that is, one for each of the ALM nodes A (304) and B (306), respectively. The allocation of encoders/decoders changes as follows: ED (X) = 4/4→ ED (X) = 2/4 and ED (Y) = 4/4 → ED (Y) = 4/2.
- Therefore, the source node list changes as follows: S(Y) = {c, d} → S(Y) = {a, b, c, d}.

According to the patent document 2, in the following loops of steps S340, S350, S360, S370, S380 and S390, the same N-Tree algorithm steps are applied. The encoder resources become depleted in the step S360, that is, ED (X) = -1/3, since a resource conflict occurs in the ALM-MCU node X (302). An encoding delay occurs. However, in the same step S360, there are unused encoder/decoder resources in the ALM-MCU node Y (308) and the ALM-MCU node Z (314). The same problem is faced in the following steps S370, S380 and S390. In this example, the problems because the ALM-MCU node resources that impede the overall quality of AV streams in an AV conference session are not considered are shown.

Below, the methods of the invention that solve the problems related to encoder/decoder resources which are described above in Figs. 2, 3, 4, 5, 6, 7, 8 and 9 are explained. However, such methods are applicable to all the resource types of ALM-MCU or ALM nodes including participant screen layout options and conference events besides encoder/decoder units. In addition, the method can be used to allocate, give priority levels to and optimize other multiple resources that can be quantified in the construction of ALM paths.

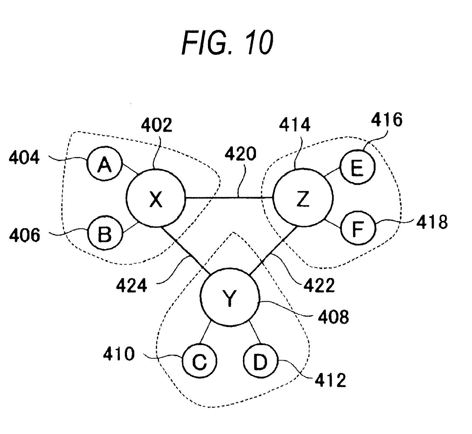

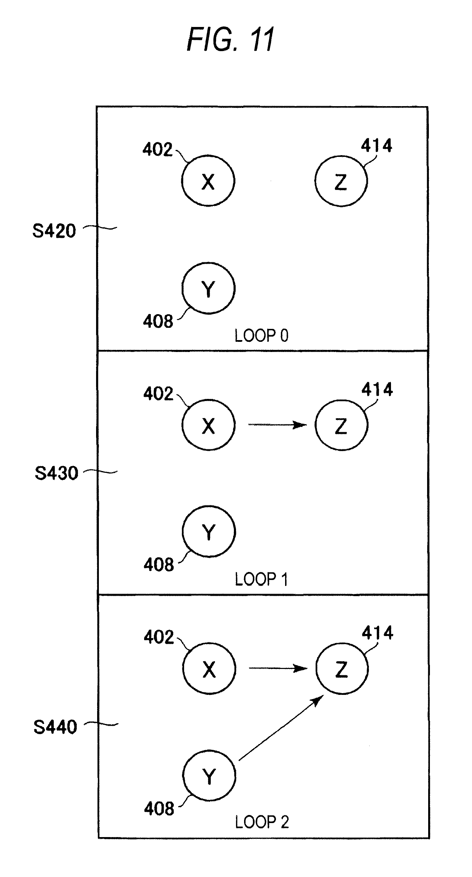

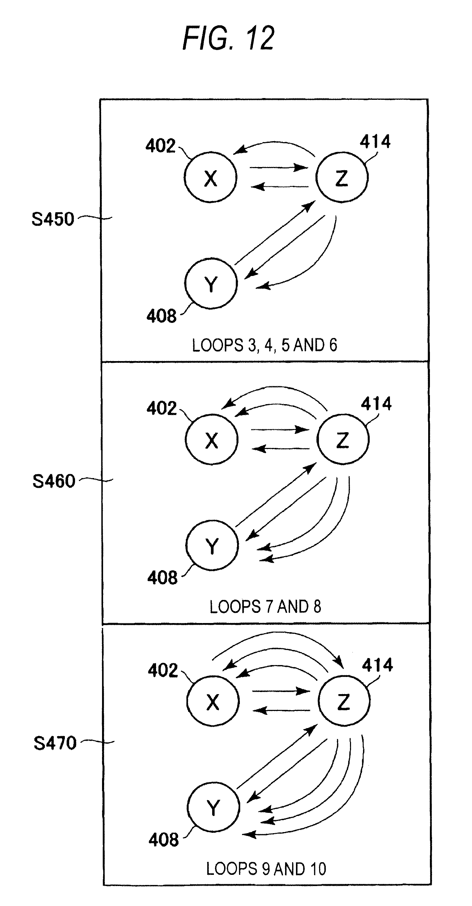

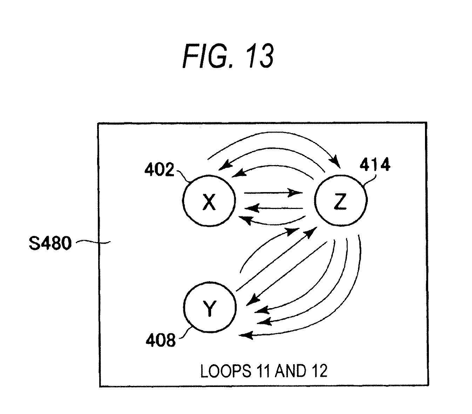

Each step of the methods of the invention is shown in Figs. 10, 11, 12 and 13. In these figures, the same examples of uploading bandwidth, latencies and encoder/decoder parameters as used in Figs. 2 to 9 are used. That is, while the invention constructs ALM paths by using an N-Tree algorithm, a method used for various conference events in which resource allocations are given priority levels and optimized is shown. For illustrative purposes, further assumptions made in addition to the assumptions described above or differences between them are described below.

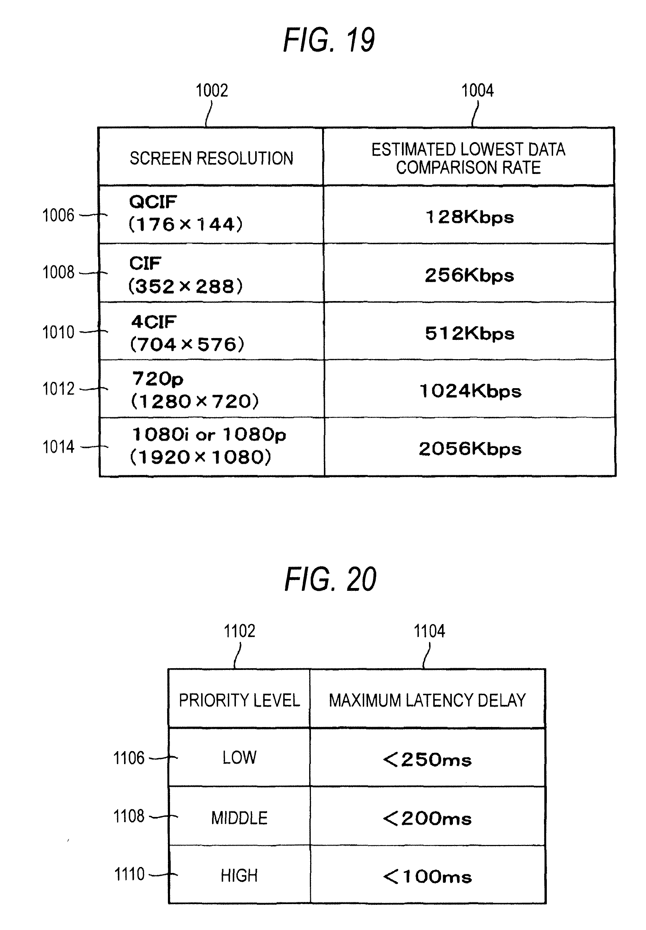

1. A slot size is not fixed, but based on screen layout resolutions/qualities (refer to Fig. 19 for bandwidth allocation for illustrative purposes).

2. Because F is a high priority level node, sufficient resources must be allocated to this node. The priority levels of all other nodes are equal.

3. The high priority level node F selects a screen layout synthesized by a stream A and a stream C (HD1080 contents) requiring bandwidth of 1 Mbps, respectively.

4. The bandwidth required by streams other than C and A are only 256 Kbps.

5. The resource which is optimized and for which priority levels are given is the number of encoders/decoders in ALM-MCUs.

To give priority levels and optimize, the following rules are applied in the methods of the invention.

Rule 1: if a node must be selected, the node that handles one or more streams requested by the highest priority level node is always selected.

Rule 2: in the nodes that equally have the highest priority level in the rule 1; the node that has the maximum resource specified by users in order to give resource priority levels and to optimize the resource type is selected.

Rule 3: in the nodes that equally have the maximum resource in the rule 2; one node is selected at random from the group.

Rule 4: when a link is selected, the route to a node that has the maximum resource specified by users in order to give resource priority levels and to optimize the resource type, is always selected.

Rule 5: in the routes to nodes that equally have the maximum resource in the rule 4; one link is selected at random from the group.

Rule 6: when a source is selected, a stream that the highest priority level node requests is always selected.

Rule 7: in the sources requested by the highest priority level node in rule 6, one stream is selected at random from the group.

Rule 8: instead of relaying one or more streams from another ALM-MCU node, a node always selects to transmit one or more its own local cluster streams first.

In this example, in order to give resources priority levels and optimize resources, the above eight rules are applied.

Step S420: a loop 0;
In an initial state, available resources including uploading bandwidth, delay, source node list, and number of encoder/decoder units are prepared.

Step S430: a loop 1;
- The ALM-MCU node X (402) which is the transmitting source of the highest priority level stream (stream A) contained in the screen layout selected by the ALM node F (418) and which holds the intra-cluster ALM node A, is selected.
- Since the ALM-MCU node Z (414) has the maximum number of encoders/decoders, the route D(X, Z) (420) is selected.
- Since 1 Mbps for HD1080 contents is allocated for the stream A from the ALM node A (404), the B(X) changes as follows: B(X) = 16 Mbps→ B(X) = 15 Mbps.
- The allocation of encoders/decoders changes as follows: ED (X) = 4/4 → ED (X) = 3/4 and ED (Z) = 8/8 → ED (Z) = 8/7.
- The list of source nodes changes as follows: S (Z) = {e, f} →S (Z) = {a, e, f}.

Step S440: a loop 2;
- The ALM-MCU node Y (408) which holds the intra-cluster ALM node C which is the transmitting source of the highest priority level stream (stream C) contained in the screen layout selected by the ALM node F (418), is selected.
- Since the ALM-MCU node Z (414) has the maximum number of encoders/decoders, the rout D(Y, Z) (422) is selected.
- Since 1 Mbps for HD1080 contents is allocated for the stream C from the ALM node C (410), the B(Y) changes as follows: B(Y) = 8 Mbps→ B(X) = 7 Mbps.
- The allocation of encoders/decoders changes as follows: ED (Y) = 4/4 →ED (Y) = 3/4 and ED (Z) = 8/7 →ED (Z) = 8/6.
- The list of source nodes changes as follows: S (Z) = {a, e, f} →S (Z) = {a, c, e, f}.

Step S450: loops 3, 4, 5, and 6;
- When high priority level ALM-MCU nodes are not left, the ALM-MCU node Z (414) that has the maximum number of encoders/decoders is selected.
- Based on the rule 8, first, streams from the ALM nodes E and F which are intra-cluster nodes of the ALM-MCU node Z, are selected as delivery objects.
- Since 0.25 Mbps is allocated to the streams from the ALM nodes E and F, respectively, the bandwidth of the ALM-MCU node Z (414) changes as follows: B (Z) = 4 Mbps→B (Z) = 3 Mbps.
- The allocation of encoders/decoders changes as follows: ED (X) = 3/4 →ED(X)=3/2, ED(Y)=3/4 → ED (Y) = 3/2 and ED (Z) = 8/6 → ED (Z) = 4/6.
- The lists of sources change as follows: S (X) = {a, b} → S (X) = {a, b, e, f}, and S (Y) = {c, d} → S (Y) = {c, d, e, f}.

Step S460: loops 7 and 8;
- In this case, when high priority level ALM-MCU nodes are not left, the ALM-MCU node Z (414) that still has the maximum number of encoders/decoders is selected.
- Since 1 Mbps is allocated to the streams from the ALM nodes A and C, respectively, the bandwidth of the ALM-MCU node Z (414) changes as follows: B (Z) = 3Mbps → B (Z) = 1Mbps.
- New source lists are as follows: S (X) = {a, b, c, e, f} and S (Y) = {a, c, d, e, f}.
- The new allocation of encoders/decoders is as follows: ED (X) = 3/1, ED (Y) = 3/1 and ED (Z) = 2/6.

Step S470: loops 9 and 10;
- Since there are no other streams that are relaying objects in the ALM-MCU node Z (414), not the ALM-MCU node Z (414) but the ALM-MCU node X (402) is selected.
- 0.25 Mbps is allocated to a stream from the ALM node B (406). For this reason, the bandwidth of the ALM-MCU node X (402) changes as follows: B(X) =15Mbps→B(X) =14.75Mbps, and the bandwidth of the ALM-MCU node Z (414) changes as follows: B (Z) = 1Mbps → B (Z) = 0.75Mbps.
- New source lists are as follows: S (Y) = {a, b, c, d, e, f} and S (Z) = {a, b, c, e, f}.
- A new allocation of encoders/decoders is as follows: ED (X) = 2/1, ED (Y) = 3/0 and ED (Z) = 2/5.

Step S480: loops 11 and 12;
- Since there are no other streams that are relaying objects in the ALM-MCU node X (402) and the ALM-MCU node Z (414), the ALM-MCU node Y (408) is selected.
- 0.25 Mbps is allocated to a stream from the ALM node D (412). The bandwidth of the ALM-MCU node Y (408) changes as follows: B (Y) = 7Mbps → B (Y) = 6.75Mbps, and the bandwidth of the ALM-MCU node Z (414) changes as follows: B (Z) = 0.75Mbps → B (Z) = 0.5Mbps.
- New source lists are as follows: S (X) = {a, b, c, d, e, f} and S (Z) = {a, b, c, d, e, f}.
- A new allocation of encoders/decoders is as follows: ED (X) = 2/0, ED (Y) = 2/0 and ED (Z) = 1/4.

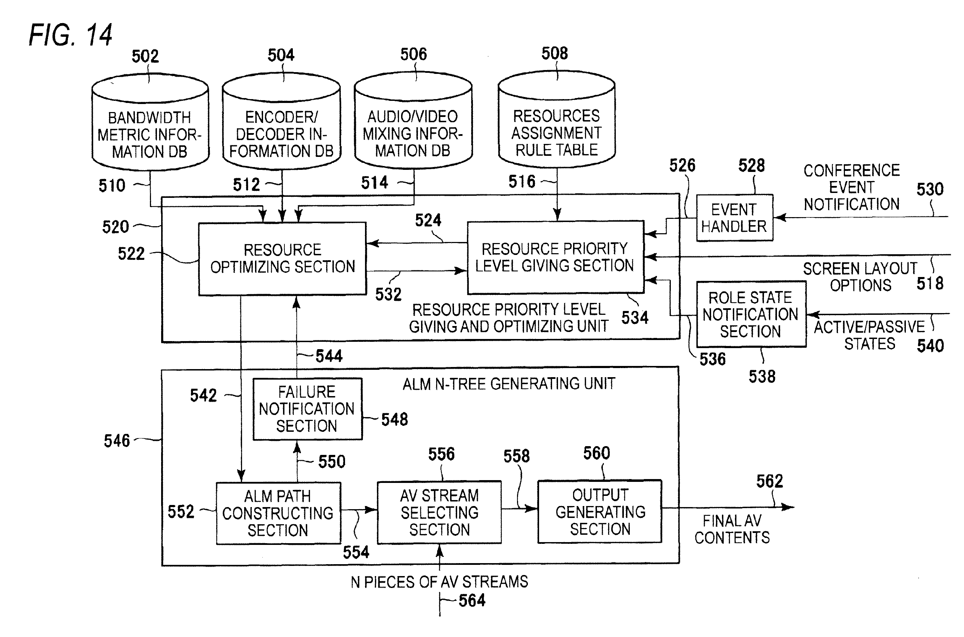

Fig. 14 is a block diagram showing the N-Tree constructing device of the invention which includes two major processing units, i.e., an ALM N-Tree generating unit (546) and a resource priority level giving and optimizing unit (520). The ALM N-Tree generating unit (546) is responsible for constructing the N-Tree (554) and generating the final AV contents (562). The ALM N-Tree generating unit (546) has a failure notification section (548), an ALM path constructing section (552), an AV stream selecting section (556), and an output generating section (560). The failure notification section (548) notifies an N-Tree constructing failure. The ALM path constructing section (552) constructs an N-Tree in which resource priority levels are given and resources are optimized. The AV stream selecting section (556) selects one or more streams for mixing operations based on the constructed N-Tree (554).The output generating section (560) generates the final AV contents (562) by mixing.

The resource priority level giving and optimizing unit (520) has a resource priority level giving section (534) and a resource optimizing section (522).The resource priority level giving section (534) gives priority levels to resource allocations based on roles of participants (536) and conference events (526). The resource optimizing section (522) optimally allocates various types of resources according to the output result of the resource priority level giving section (534) and the database (502), (504) and (506) which store resource information.

A bandwidth metric information database (bandwidth metric information DB) (502) stores the bandwidth information of all the ALM-MCU nodes and ALM nodes. An encoder/decoder information database (encoder/decoder information DB) (504) stores encoder/decoder related information. An audio/video mixing information database (audio/video mixing information DB) (506) stores AV mixing information. The resource optimizing section (522) individually accesses these three databases, through links 510, 512 and 514, respectively. The resource priority level giving section (534) reads out resource allocation rules from a resource allocation rule table (508) through a link 516.

The resource priority level giving section (534) considers (i) conference event notifications (530) arrived at an event handler (528) and (ii) screen layout options (518). A role state notification section (538) receives active/passive states (540) of participants.

The communication between the resource optimizing section (522) and the resource priority level giving section (534) is carried out through links 524 and 532, respectively. The resource optimizing section (522) instructs the ALM path constructing section (552) through a link 542. However, the reverse communication between the resource optimizing section (522) and the ALM path constructing section (552) also occurs through the failure notification section (548) using links 550 and 544. After N AV streams that arrives through a link 564 are selected by the AV stream selecting section (556), they are transferred to the output generating section (560) through a links (558).

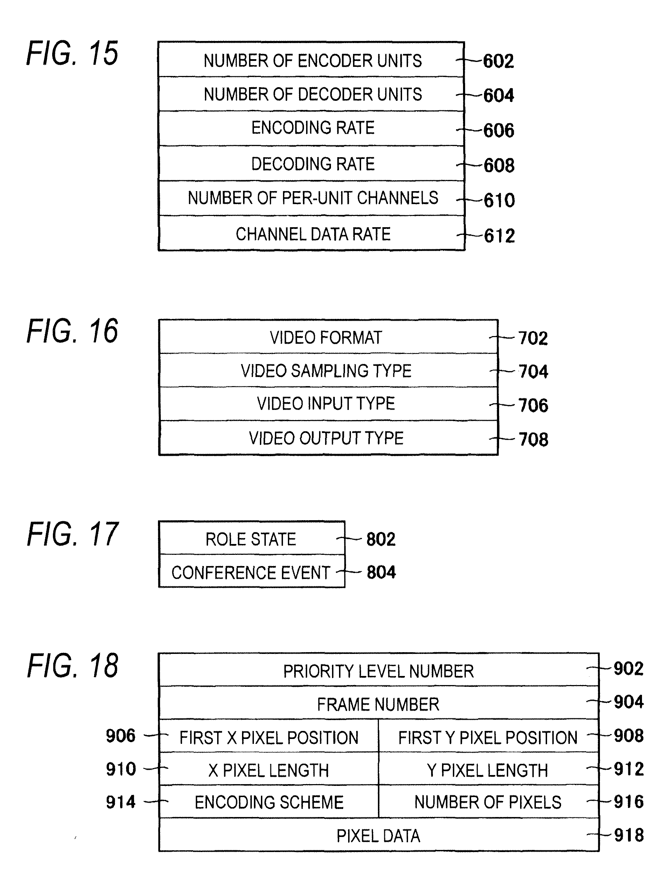

Fig. 15 shows a structure of MCU resource state messages. As shown in Fig. 15, the MCU resource state messages include the number of encoder units (602), the number of decoder units (604), an encoding rate (606), a decoding rate (608), the number of per-unit channels (610), and a channel data rate (612).

Fig. 16 shows a structure of MCU video input and output (I/O) state messages. As shown in Fig. 16, the MCU video input and output (I/O) state messages include a video format (702), a video sampling type (704) which indicates a video sampling rate, a video input type (706), and a video output type (708) which notifies a video resolution. The video format (702) notifies whether or not the format of a video is NTSC, PAL, 720P, 1080i or SXGA. The video sampling type (704) includes 13.5MHz, 4:2:2 (Y: B - Y: R -Y) for a standard definition, 74.1758MHz (V = 59.94Hz)/ 74.25MHz (V = 50Hz) for a high definition and 65MHz-110MHz, 4:4:4(G: B: R) for RGB.

Fig. 17 shows a structure of conference configuration state messages. As shown in Fig. 17, the conference configuration state messages include a role state (802) that notifies whether a participant is an active or passive participant; and a conference event (804) that notifies the event type of a conference sessions.

Fig. 18 shows a structure of a video stream. As shown in Fig. 18, the video stream includes a priority level number (902) to inform the importance level of the video stream in the conference session, a frame number (904), a first X pixel position (906), a first Y pixel position (908), an X pixel length (910), a Y pixel length (912), an encoding scheme (914), the number of pixels (916), and pixel data (918).

Fig. 19 specifies estimated bandwidth of respective resolution types. A column (1002) indicates various types of screen resolutions, for example, QCIF, CIF, 4CIF, 720p, 1080i or 1080p. A column (1004) indicates an estimated lowest data compression rate in Kbps. Each of the rows (1006, 1008, 1010, 1012 and 1014) shows a screen resolution (1002) and a respective estimated bandwidth required (1004). These are estimated bandwidth values for illustrative purposes, and may be changed based on screen resolutions or user requirements.

Fig. 20 specifies the respective maximum latencies (delays) of priority levels. A column (1102) indicates priority levels, for example, low (1106), middle (1108) or high (1110). A column (1104) indicates the maximum latencies (delays). Rows (1106, 1108 and 1110) show priority levels and the respective maximum latencies (delays). These are examples for illustrative purposes, and may be changed based on the setting of priority levels.

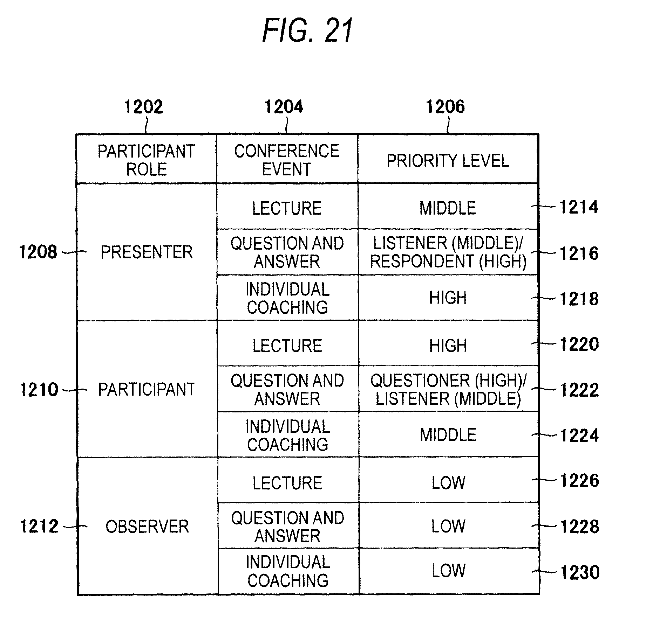

Fig. 21 shows a priority level table of participants based on the roles of the participants in conference events. A column (1202) indicates the roles of participants, for example, a presenter (1208), a participant (1210) and an observer (1212). A column (1204) indicates conference events, for example, a lecture (row 1204 and column 1214), a question and answer (row 1204 and column 1216) or an individual coaching (row 1204 and column 1218). The last column (1206) indicates priority levels for the roles of specific participants in conference events including middle (row 1206 and column 1214/1224), listeners (middle) and respondents (high) (row 1206 and column 1216), high (row 1206 and column 1218/1220), questioner (high) and listeners (middle) (rows 1206 and column 1222), and low (row 1206 and column 1226/1228/1230).

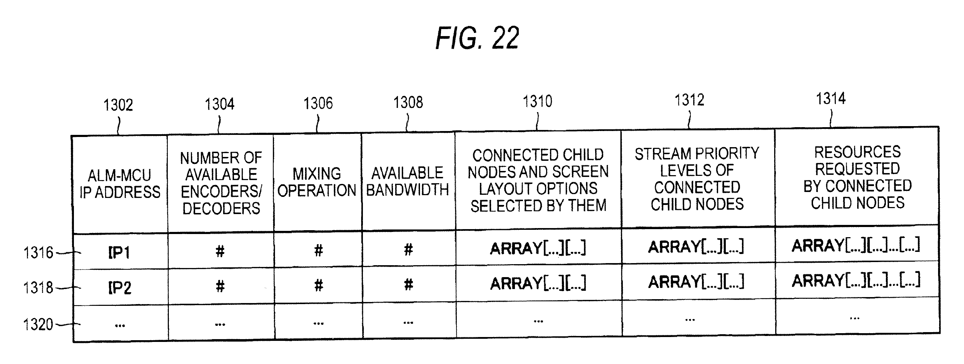

Fig. 22 shows a MCU resource information table. As shown in Fig. 22, the MCU resource information table includes an ALM-MCU IP address (1302), the number of available encoders/decoders (1304), an mixing operation (1306), an available bandwidth (1308), connected child nodes and screen layout options selected by them (1310), stream priority levels of the connected child nodes (1312), and resources requested by the connected child nodes (1314). In addition, the MCU resource information table may further include N pieces of MCUs (1316, 1318 and 1320).

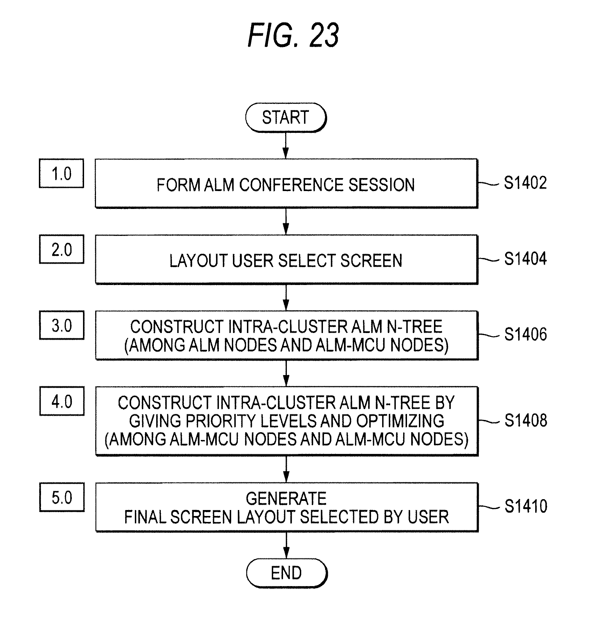

Fig. 23 is a flowchart which shows the main steps of the N-Tree constructing method of the invention in which resources are allocated by being given priority levels and optimized. As shown in a step S1402 of Fig. 23, each and every node tries to participate in a session to form an ALM conference session in an initial stage. When the step S1402 is complete, as shown in a step S1404, users are prompted to select screen layouts for themselves from an available list. In the next step S1406, the ALM path constructing section (552) constructs a N-Tree in which bandwidth is fairly allocated for the purpose of intra-cluster network connections among ALM-MCU nodes and ALM nodes (as described in the patent document 1). In other words, the ALM path constructing section (552) guarantees that bandwidth is equally shared and used. Thereafter, in a step S1408, the ALM path constructing section (552), together with the resource priority level giving and optimizing unit (520), constructs the N-Tree. In particular, the ALM path constructing section (552), constructs the N-Tree in which resource priority levels are given and resources are optimized for the purpose of inter-cluster network connections among different ALM-MCU nodes. The detailed steps of constructing the N-Tree in which resource priority levels are given and resources are optimized will be described later. Finally, in a step S1410, the AV stream selecting section (556) selects relevant AV streams as inputs based on the constructed N-Tree (554). The AV stream selecting section (556) instructs the output generating section (560) to generate the final output (562) by mixing.

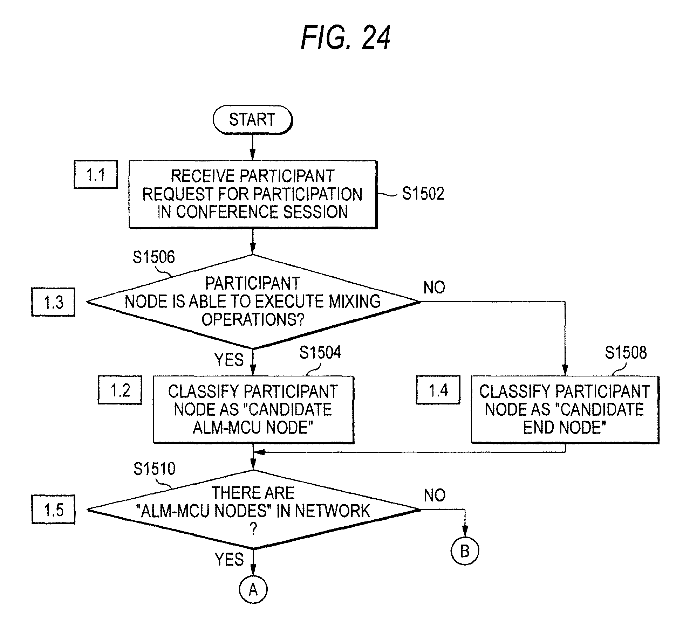

Figs. 24-27 are flowcharts of the methods performed by ALM nodes or ALM-MCU nodes in order to participate in a conference session. In a step S1502, the process starts upon receiving the request of a participant to participate in the conference session. The process proceeds to a step S1506, and in the step S1506, the mixing capacity of the participant node is checked. If it is determined that the participant node is able to execute mixing operations (step S1506: Yes), the participant node is classified as a "candidate ALM-MCU node" (one of the ALM-MCU nodes) (step S1504). On the other hand, if it is determined that the participant node is unable to execute mixing operations (step S1506: No), the participant node is classified as a "candidate end node" (one of the ALM nodes) (step S1508).

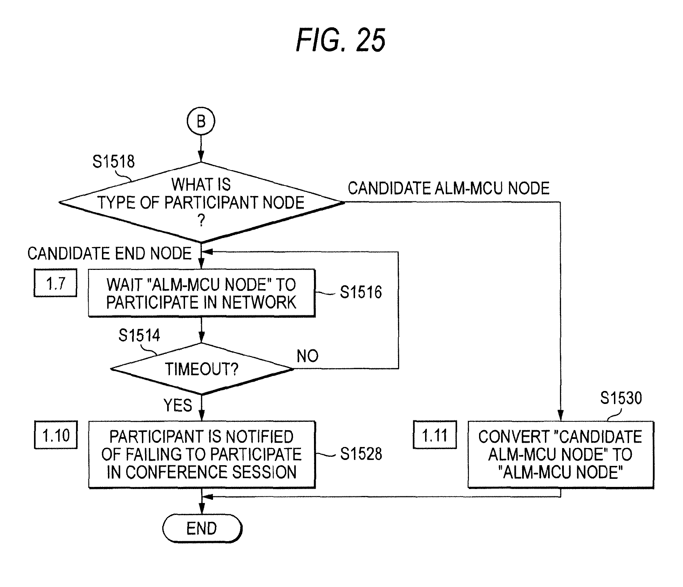

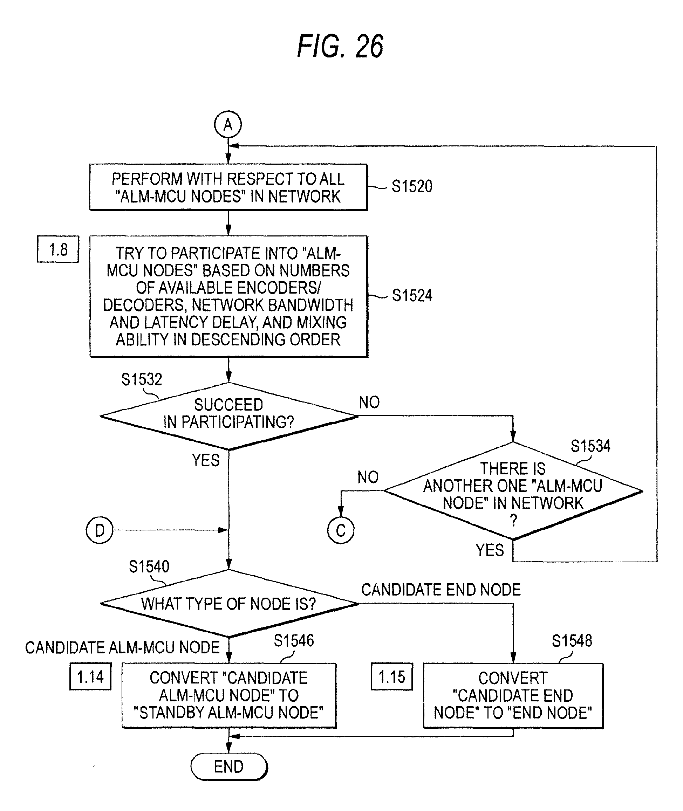

In a step S1510, it is determined whether there are ALM-MCU nodes in the network. If it is determined that there are no "ALM-MCU nodes" in the network (step S1510: No), the process proceeds to a step S1518 of Fig. 25. If the participant node type is a "candidate ALM-MCU node" (step S1518), the node is converted to an ALM-MCU node (step S1530). On the other hand, if the participant node type is a "candidate end node" (step S1508), the process proceeds to a step S1516. In the step S1516, the participant node waits to participate in the network. Furthermore, the node in the step S1516 repeats checking if the waiting time of the participant node exceeds a specific timeout value (step S1514). If the waiting time of the participant node exceeds the time-out value (step S1514: Yes), an error is triggered (step S1528). On the other hand, If there is at least one "ALM-MCU node" in the network (step S1510: Yes), the process proceeds to a step S1520 of Fig. 26. The participant node recursively tries to participate with ALM-MCU nodes based on the respective parameters in a descending order (step S1520) (step S1524). Furthermore, the respective parameters include number of available encoders/decoders, network bandwidth, latency (delay), and mixing ability. If a participant node succeeds in participating (step S1532), and if the node is a "candidate ALM-MCU node", the participant node is converted to a "standby ALM-MCU node" (step S1540) (step S1546). On the other hand, if the node is a "candidate end node", the node is converted to an "end node" (step S1540) (step S1548).

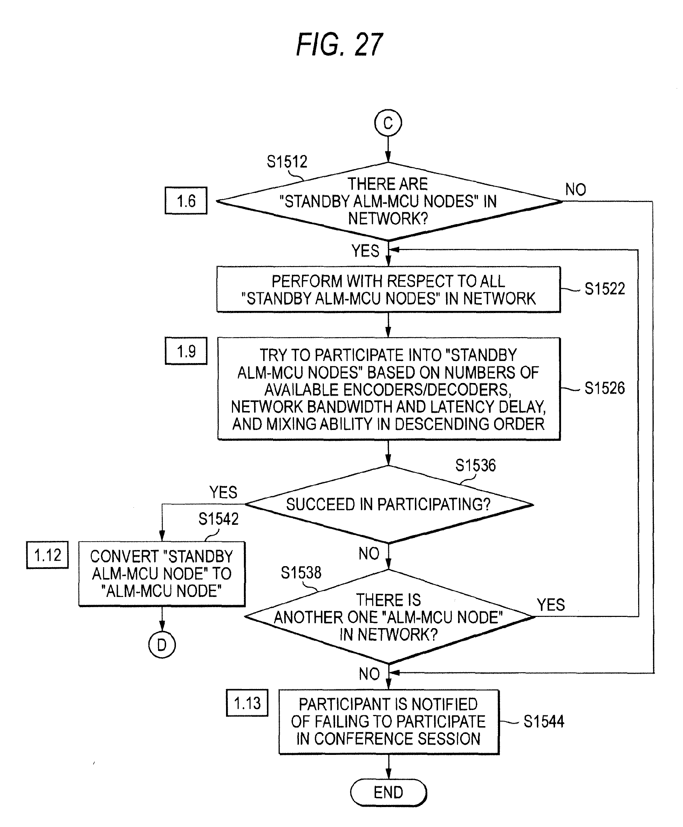

Next, the flowchart proceeds to a step S1512 of Fig. 27.It is determined whether or not there are "standby ALM-MCU nodes" in the network (step S1512). If there is at least one "standby ALM-MCU node" in the network (step S1512: Yes), the participant node tries recursively to participate in the "standby ALM-MCU node" based on respective parameters in a descending order (step S1522) (step S1526). Furthermore, the respective parameters include number of available encoders/decoders, network bandwidth, latency (delay), and mixing ability. Upon successful participation (step S1536: Yes), the "standby ALM-MCU node" is converted to an "ALM-MCU node" (step S1542), and the process proceeds to a step S1540 of Fig. 26. The participant node is, based on its type (step S1540), converted to a "standby ALM-MCU node" or an "end node" (step S1546) (step S1548). On the other hand, if the participant node fails to participate in the "standby ALM-MCU node" (step S1536: No) and if there are no "standby ALM-MCU nodes" in the network (step S1538: No), the process proceeds to a step S1544. In the step S1544 the participant is notified of failing to participate in the conference session.

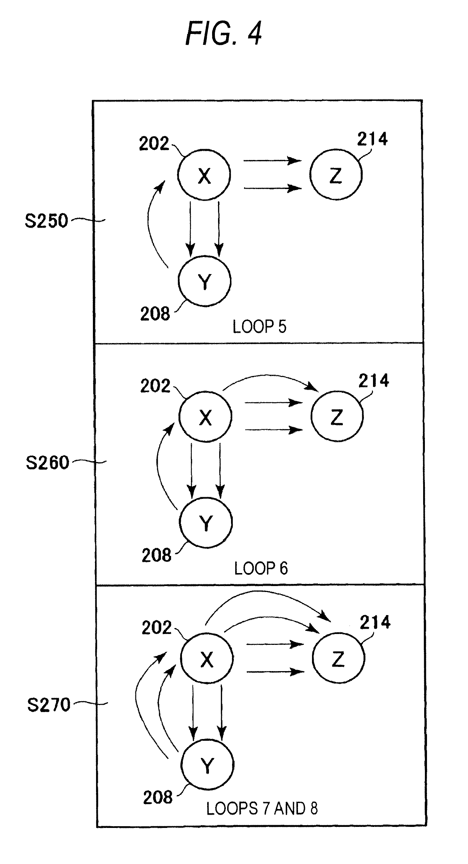

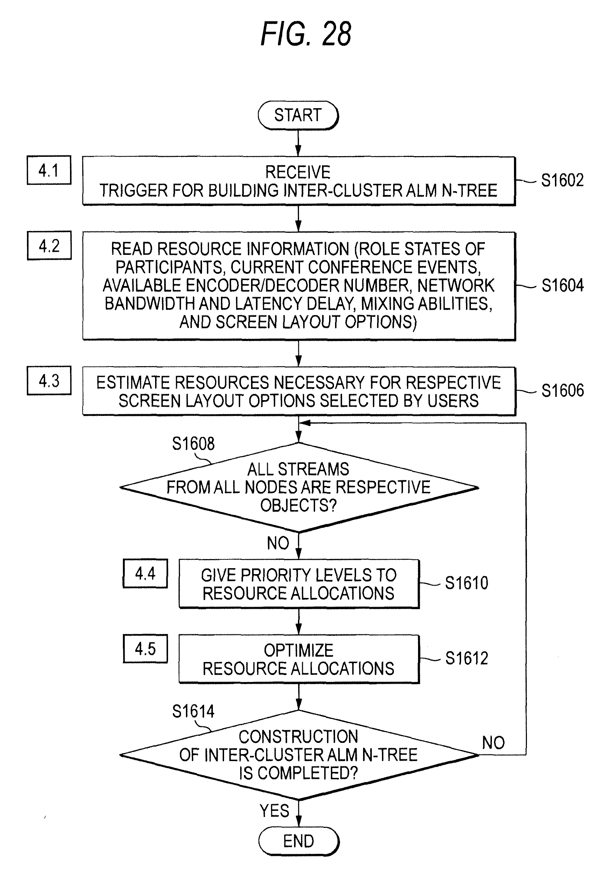

Fig. 28 is a flowchart which shows the detailed functional flow of the step S1408 in which an inter-cluster ALM N-Tree is constructed by giving resources priority levels and optimizing resources. In a step S1602, a trigger is received for constructing an ALM N-Tree. In a step S1604, the resource priority level giving and optimizing unit (520) reads out the role state of a participant (540) through the role state notification section (538), and current conference event (530) through the event handler (528). In addition, the resource priority level giving and optimizing unit (520) reads out current resource information through the database (502) (504) (506) in which the resource information are stored, respectively. The current resource information include network bandwidth and latency (delay) (510), and numbers of available encoders/decoders (512), mixing ability (514), and user screen layout options (536). This resource information, as shown in Fig. 22, is all stored in a MCU resource information table. In addition, it is expected that in the resource information reading process, some of the messages as shown in Figs. 15, 16, 17, 18, 19 and 20 are exchanged between ALM and ALM-MCU nodes. The process proceeds to a step S1606, and in the step S1606, the processing, including estimation of the resources necessary for each of the screen layout options selected by the users, is performed. Details of this step will be described in the following paragraphs. Next, in steps S1608, S1610, S1612 and S1614, an ALM N-Tree in which resource priority levels are given and resources are optimized is constructed. The resource priority level giving section (534) is responsible for giving resource allocations priority levels based on the resource allocation table read out of the defined resource allocation rule table (508), input conference events (526), screen layout options (536) and role states (536). Rules are prescribed according to the roles of participants in specific conference events. As a result, a good method in which resource allocations are given priority levels is obtained by exercising influences on the priority levels of ALM-MCU nodes that are selected in the node selecting process. An example of rule tables is shown in Fig. 21. On the other hand, the resource optimizing section (522) is responsible for optimizing resource allocations associated with available resources. In order to consider different types of resources other than bandwidth and latency (delay), the link selecting process is different from previous ALM N-Tree algorithm. However, through the link selecting process, as proved by the example of Fig. 4, an optimized N-Tree is constructed as a result.

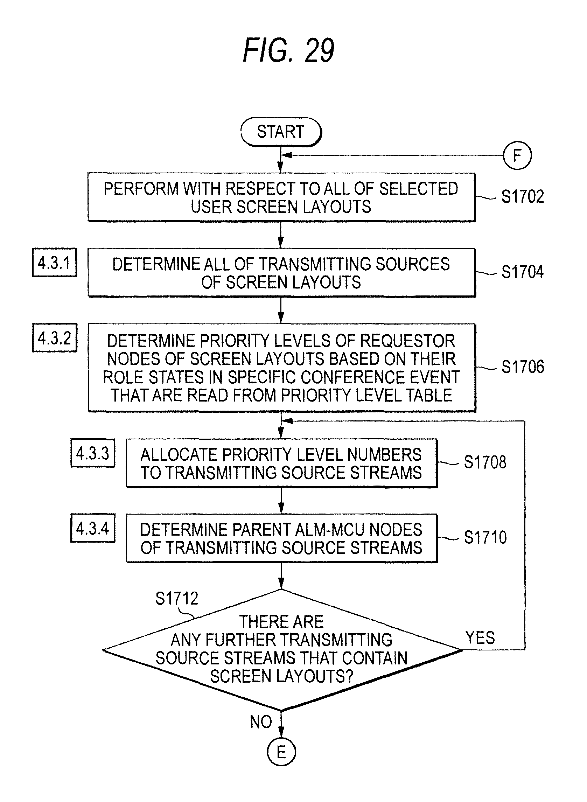

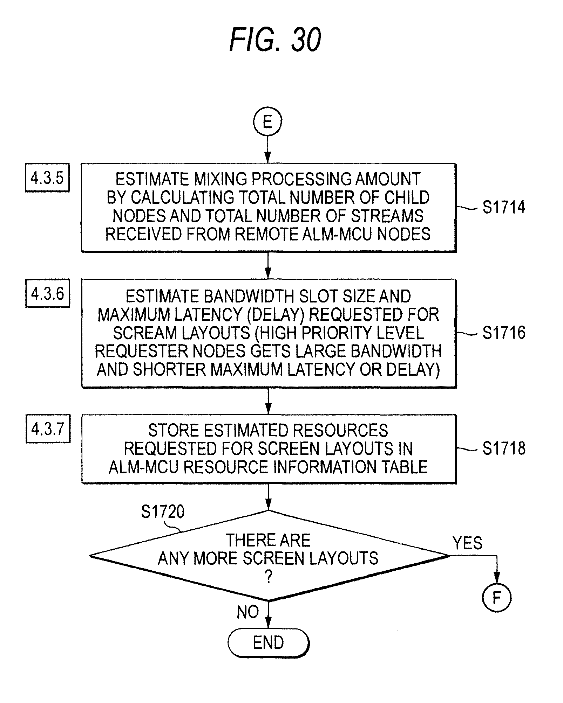

Figs. 29 and 30 show flowcharts of detailed processes of estimating resources necessary for each of the screen layout options selected by the users. For a step S1702, the processes after a step S1704 are executed for all users that change screen layouts. In the step S1704, all of the transmitting sources of the screen layout options are determined. In the next step S1706, the resource priority level giving section (534) determines the priority levels of the requestor nodes of the screen layout options, based on the resource allocation rule table (508) and their role states (536) in a specific conference event (526). In some of the following steps S1708, S1710 and S1712, a priority level number is set to each of the source stream head messages (902) of the transmitting sources, and each of the parent ALM-MCU nodes is also determined. The process proceeds to a step S1714 of Fig. 30, and in the step S1714, mixing processing amount is estimated by calculating the total number of child nodes and the total number of the streams received from remote ALM-MCU nodes. Thereafter, in a step S1716, bandwidth slot size and maximum latency (delay) are estimated. Finally, in a step S1718, all of the resource information estimated above is stored in the ALM-MCU resource information table shown in Fig. 22.

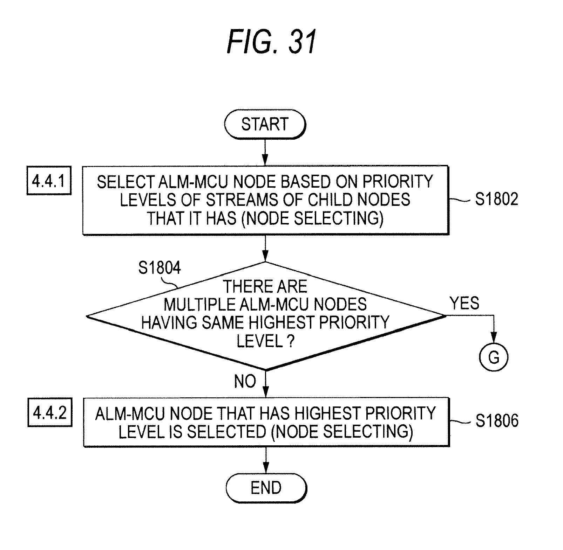

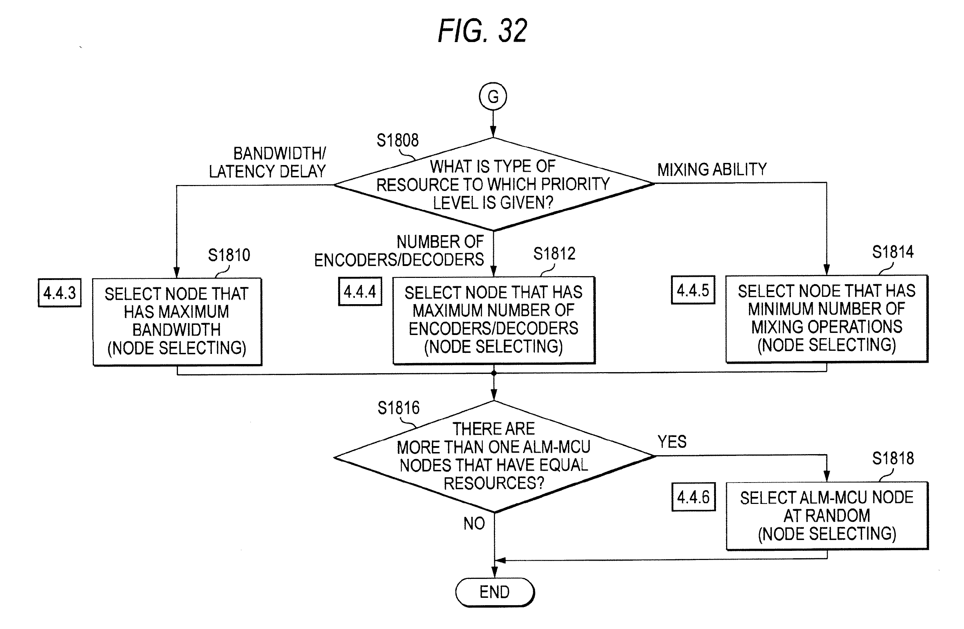

Figs. 31 and 32 are flowcharts which show the determinations made by the resource priority level giving section (534) in the phase of giving resource allocations priority levels (node selecting) in the construction of an inter-cluster ALM N-Tree. The process starts with a node selecting process (step S1802), and in the step S1802, first, an ALM-MCU node that has a child node that is the transmitting source of a high priority level stream is selected. In a step S1804, it is determined whether there are multiple ALM-MCU nodes having the same highest priority level. If there is only one ALM-MCU node that has the highest priority level (step S1804: No), the node is selected for the resource allocation process (step S1806). On the other hand, if there are more than one ALM-MCU nodes (step S1804: Yes), an ALM-MCU node is selected based on the resource types for which priority levels are given (step S1808). Here, a node that has the maximum bandwidth, which is the resource for which priority levels are given, may be selected (step S1810). Or, a node that has the maximum number of encoders/decoders, which is the resource for which priority levels are given, may be selected (step S1812). Or, a node that performs the minimum number of mixing operations, which is the resource for which priority levels are given, may be selected (step S1814). If there are still more than one ALM-MCU nodes that have the same priority level and equal resources (step S1816: Yes), in the step S1818, an ALM-MCU node is selected at random.

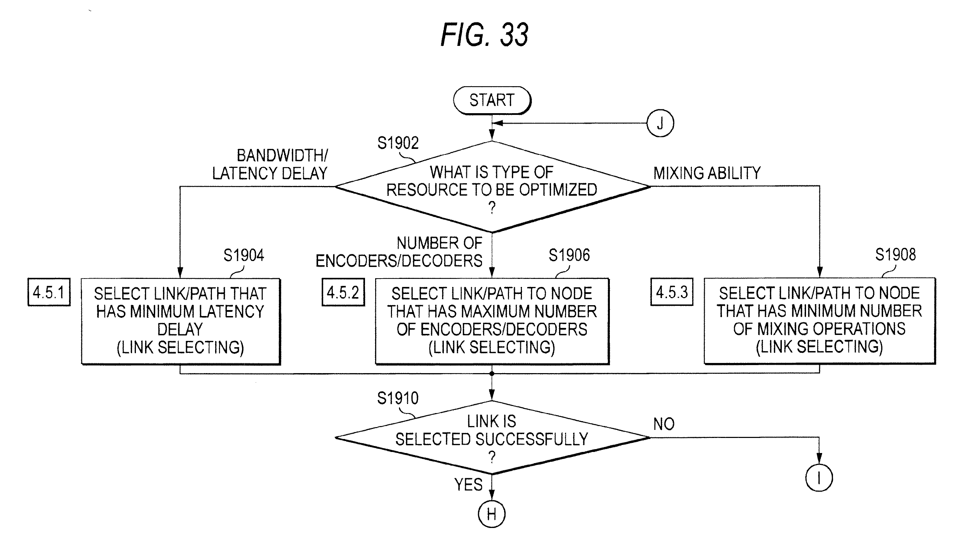

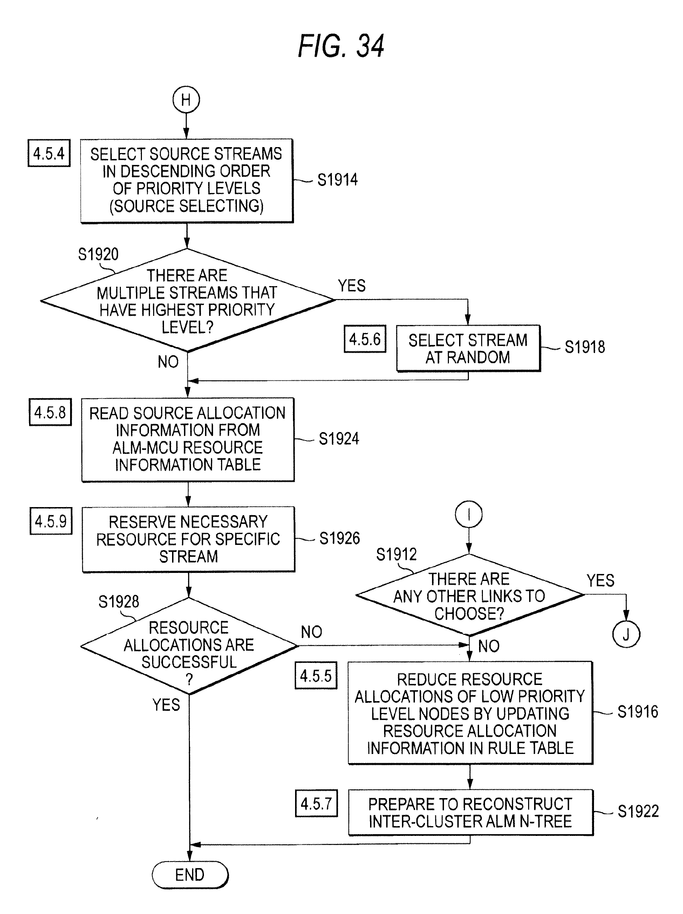

Figs. 33 and 34 are flowcharts which show the determinations made by the resource optimizing section (522) in the phase of optimizing resource allocations (link selecting) in the construction of the inter-cluster ALM N-Tree. In a step S1902, a link to be selected is judged based on optimized resource types. Here, a link with the minimum latency (delay), which is a type of resource to be optimized, may be selected (step S1904). Or, a link to a node having the maximum number of encoders/decoders, which is a type of resource to be optimized, may be selected (step S1906). Or, a link to a node that performs the minimum number of mixing operations, which is a type of resource to be optimized, may be selected (step S1908). This process is recursively executed until the link selection is successful (step S1910) (step S1912). When there are no links to be selected (step S1912: No), it is determined that the resource allocation information in the rule table is updated in order to reduce the resource allocations of low priority level nodes (step S1916). Further, preparation is made to reconstruct an inter-cluster ALM N-Tree (step S1922). On the other hand, if the link selection is successful (step S1910: Yes), the process proceeds to the source selecting process of Fig. 34, and in the process, source streams are selected in a descending order of priority levels (step S1914). If there are multiple streams that have the highest priority level, it is determined that a stream is selected at random from the group (step S1920 and step S1918). Finally, the resource optimizing section (522), reads out the resource allocation information from the ALM-MCU resource information table (step S1924), and reserves necessary resources for a specific stream (step S1926). If the resource allocation is not successful (step S1928: No), the resource allocations of low priority level nodes are reduced by updating the resource allocation information in the rule table (step S1916). And the resource allocations are made ready to reconstruct an inter-cluster ALM N-Tree (step S1922).

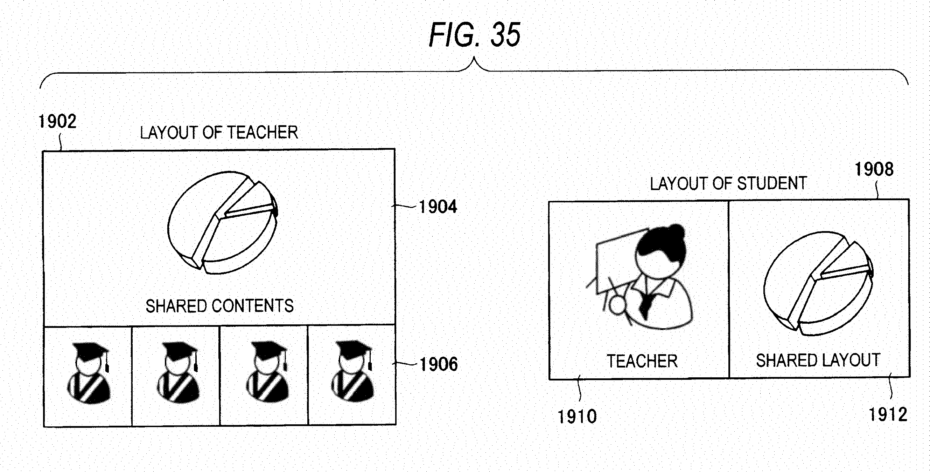

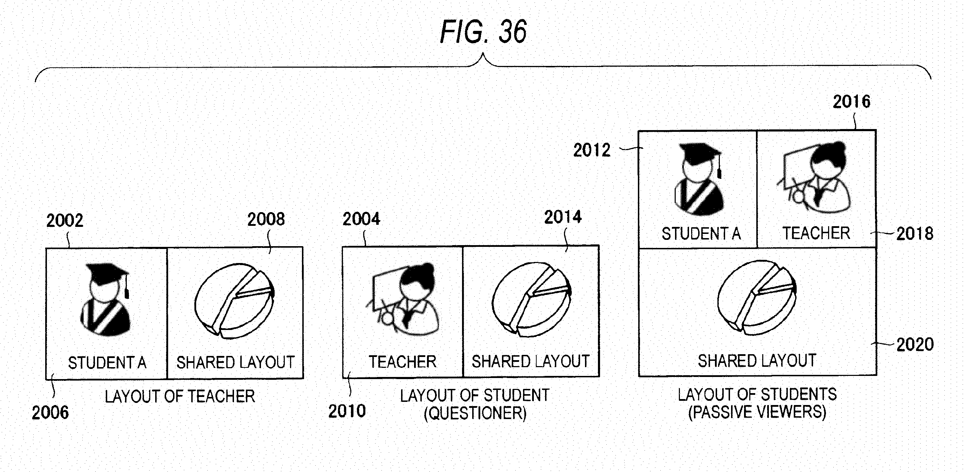

Next, a specific example of the screen layouts in the embodiment is explained by using Figs. 35 and 36. Symbols 1902 and 1908 in Fig. 35 and symbols 2002, 2004 and 2016 in Fig. 36 show an example of a lecture (1204) session that has conference events with different roles of participants (1202) such as teachers, students (questioners) and students (listeners). Some of the conference events and roles of participants are shown in Fig. 21. The priority levels (1206) of the participants (1202) in the events (1204) are allocated, respectively. Resources including MCU and bandwidth are allocated based on the priority levels of the roles of participants (1202) and the conference events (1204).

In Fig. 35, resources such as MCU and network bandwidth are given priority levels for full mixing of the layout of students (1908) including streams of the teacher (1910) and shared contents (1912). The layout of students (1908) is watched by many students. In this case, the role of students is given a high priority level. On the other hand, since the layout of the teacher (1902) including shared contents (1904) and selected students (1906) is watched only by the teacher, a partial mixing is made.

When the conference event (1204) changes, priority levels (1206) allocated to the roles of participants (1202) are changed, as shown in Fig. 21. In Fig. 36, a student A (2006) "refers to the layout of students (2004)" to question, and the teacher "refers to the layout of the teacher (2002)" to refer to the specific student A (2006) and his/her own shared contents (2008). The student A watches the teacher (2010) and shared contents (2014). On the other hand, other passive viewers watch the student A (2012), the teacher (2018) and shared contents (2020) through the layout of students (2016). In this scenario, it is necessary to stream three different contents to different recipients respectively by making either full mixing or partial mixing. In this case, the table of Fig. 21 can be used to determine the priority levels of contents depending on the ability of (either full or partial) mixing and different bandwidth.

As described above, according to the embodiment, to construct AV paths, it is possible to give priority levels to and optimize dynamic resource allocations based on AV mixing (MCU) abilities, encoding and decoding abilities, screen layout options of participants and conference events. Therefore, a real-time AV conference system that is able to optimize given AV processes and network resources, can be provided by reflecting the dynamic needs of users.

Although the present invention is described in detail with reference to the embodiments, it is apparent that various modifications and amendments may be made by those skilled in the art without departing from the spirit and scope of the invention.

This application is based on the Japanese patent application (patent application 2010-227993) filed on October 7, 2010, the contents of which are incorporated herein by reference.

### Industrial Applicability

The path constructing device of the invention can be used as a N-Tree constructing device in which resources are dynamically allocated by being given priority levels and optimized based on respective parameters in order to construct AV paths (in particular, ALM paths) which are contents delivery paths.

### Reference Signs List

- 546: ALM N-Tree generating unit
- 520: resource priority level giving and optimizing unit
- 548: failure notification section
- 552: ALM path constructing section
- 556: AV stream selecting section
- 560: output generating section
- 534: resource priority level giving section
- 522: resource optimizing section
- 502: bandwidth metrics information database
- 504: encoder/decoder information database
- 506: audio/video mixing information database
- 508: resource allocation rule table

## Claims

1. A path constructing device for constructing a delivery path of stream contents which are transmitted and received among a plurality of communication nodes in a system, and being one communication node in the system, the path constructing device comprising:
a resource priority level giving section that gives priority levels to allocations of available resources to construct the delivery path;
a resource optimizing section that optimizes the allocations of the available resources to construct the delivery path; and
a path constructing section that constructs the delivery path of the stream contents based on the allocations of the resources which are given priority levels by the resource priority level giving section and optimized by the resource optimizing section.

2. The path constructing device according to claim 1, further comprising:
a stream data selecting section that selects stream data for a mixing operation based on the delivery path constructed by the path constructing section; and
a stream contents generating section that generates stream contents by mixing the stream data selected by the stream data selecting section.

3. The path constructing device according to claim 1 or 2, wherein the resource priority level giving section and the resource optimizing section estimate resources necessary for each of specified inputs by retrieving a plurality of resource information;
wherein the resource priority level giving section gives priority levels to the allocations of the resources based on the specified inputs; and
wherein the resource optimizing section optimizes the allocations of the resources based on the specified inputs.

4. The path constructing device according to claim 3, wherein each of the specified inputs includes at least one of a screen layout option, a volume change, and a change of available bandwidth.

5. The path constructing device according to claim 3 or 4, wherein the plurality of resource information include at least one of current network bandwidth and latency, the number of available encoder/decoder units, ability of generating stream contents from a plurality of stream data, event information that show the details of the events hold by the system, and role states of the end nodes in the system.

6. The path constructing device according to any one of claims 1 to 5, further comprising:
a failure notifying section that notifies the resource optimizing section of a failure of path constructing for the purpose of resource reallocation.

7. The path constructing device according to any one of claims 1 to 6, wherein the system contains a network with variable bandwidth and a variable number of heterogeneous nodes.

8. A path constructing method for constructing a delivery path for transmitting stream contents which are transmitted and received among a plurality of communication nodes in a system, and being performed by one communication node in the system, the path constructing method comprising:
a resource priority level giving step for giving priority levels to allocations of available resources to construct the delivery path;
a resource optimizing step for optimizing the allocations of the available resources to construct the delivery path; and
a path constructing step for constructing the delivery path of the stream contents based on the allocation of the resources which are given priority levels in the resource priority level giving step and optimized in the resource optimizing step.
